## Europäisches Patentamt

## European Patent Office

(11) Numéro de publication: **0 153 260**

**B1**

## Office européen des brevets

(19)

(12)     **FASCICULE DE BREVET EUROPÉEN**

(45) Date de publication du fascicule du brevet:
20.05.87

(51) Int. Cl.⁴: **C 22 C 33/00**

(21) Numéro de dépôt: **85420024.3**

(22) Date de dépôt: **12.02.85**

(54) Procédé de production de ferro-manganèse affiné par réactions metallo-thermiques en poche.

| | |
|---|---|
| (30) Priorité: **14.02.84 FR 8402903** | (73) Titulaire: **PECHINEY ELECTROMETALLURGIE, Tour Manhattan La Défense 2-5, 6 place de l'Iris, F-92400 Courbevoie (FR)** |
| (43) Date de publication de la demande: **28.08.85 Bulletin 85/35** | (72) Inventeur: **Demange, Michel, 530, Chemin de la Combe Passy, F-74190 Le Fayet (FR)**<br>Inventeur: **Septier, Louis, Le Beau Site 42 Avenue Ravanel le Rouge, F-74400 Chamonix (FR)** |
| (45) Mention de la délivrance du brevet: **20.05.87 Bulletin 87/21** | |
| (84) Etats contractants désignés: **AT BE CH DE GB IT LI LU NL SE** | (74) Mandataire: **Pascaud, Claude, PECHINEY 28, rue de Bonnel, F-69433 Lyon Cedex 3 (FR)** |
| (56) Documents cité:<br>**WO-A-81/00262**<br>**FR-A-778 165**<br>**FR-A-1 321 508**<br>**FR-A-1 469 002**<br>**FR-A-1 478 290**<br>**FR-A-2 421 955**<br>**US-A-3 347 664**<br>**US-A-3 652 263**<br>**US-A-4 190 435** | |

LIBER, STOCKHOLM 1987

## Description

### OBJET DE L'INVENTION

La présente invention concerne un procédé d'obtention d'alliages de manganèse à moyenne teneur en carbone et, en particulier de ferromanganèse non saturé en carbone, et dont la teneur en cet élément est généralement comprise entre 0,1 et 2%, à partir de minerais dans lesquels le manganèse est à un degré d'oxydation moyen supérieur à 3, et, de préférence, compris entre 3,5 et 4.

La production des alliages de manganèse destinés à la sidérurgie est effectuée suivant deux grands types de procédés:

- lorsqu'on veut obtenir des alliages saturés en carbone, on traite par un ou plusieurs réducteurs carbonés des minerais de manganèse dans un four électrique ou dans un haut fourneau;

- lorsqu'on veut obtenir des alliages non saturés en carbone, deux modes opératoires sont possibles:

a) on décarbure partiellement un alliage saturé en carbone par une injection d'oxygène effectuée dans un réacteur, ce terme désignant, de façon générale, toute enceinte réfractaire appropriée à l'opération métallurgique qu'on y effectue. Ce procédé conduit à une teneur finale en carbone d'environ 1 à 2%;

b) on fait réagir un alliage fer-manganèse-silicium (dit silicomanganèse) sur du minerai de manganèse en présence de chaux; ces reactions peuvent s'effectuer dans un four electrique analogue à ceux utilisés en aciérie ou dans une poche après fusion préalable du minerai de manganèse et de la chaux. Dans ce type de procédé, le manganèse est au degré d'oxydation +2, soit que le minerai ait subi une préréduction préalable, soit du fait du passage spontané du degré +4 au degré +2 au cours de la fusion du mélange de minerai et de chaux.

### ETAT DE LA TECHNIQUE

Un procédé de réduction silico-thermique de minerai de manganèse a été décrit, notamment dans le brevet américain US 3 347 664 (au nom d'UNION CARBIDE). Dans ce procédé, et dans de nombreux procédés analogues dans lesquels on traite un mélange fondu de minerai de manganèse et de chaux par un réducteur à base de silicium, on obtient, outre le métal, un laitier non épuisé dont la teneur en manganèse peut atteindre jusqu'à 20 à 25 %, lorsqu'on opère par silico-thermie et jusqu'à 30 à 35 %, lorsqu'on produit du ferro-manganèse carburé (à 6-8 % de C) par carbothermie. Actuellement, ces laitiers sont refroidis en lingotières, stockés et retraités dans un stade ultérieur par carbothermie au four électrique, ce qui donne un laitier à peu près épuisé (moins de 6% de Mn) et un silico-manganèse dont la teneur en Si peut aller de 10 à 45 % que l'on réintroduit dans un cycle de silicothermie. Mais, ce faisant, on perd toute la chaleur sensible contenue dans le laitier liquide riche en Mn, et il faut, en outre, affecter un four spécial à l'épuisement carbothermique de ce laitier.

Dans le brevet US 4 363 657 au nom de la demanderesse, on a décrit un procédé d'obtention d'alliage à base de manganèse par silicothermie en poche d'un laitier oxydé contenant de l'oxyde de manganèse, caractérisé par la succession des phases suivantes:

- on introduit dans la poche le laitier oxydé, liquide, contenant de 10 à 40 % et, de préférence, de 20 à 35 % d'oxyde de manganèse à une valence sensiblement égale à 2;

- on introduit dans la poche un alliage réducteur à base de silicium contenant plus de 60 %, et, de préférence, plus de 70 % de silicium;

- on met en contact, par agitation, le laitier liquide et l'alliage réducteur;

- on separe, par décantation, d'une part un laitier sensiblement épuisé en manganèse et, d'autre part un métal dont la teneur en manganèse est au moins égale à 60 % et, de préférence, au moins égale à 70 %, et dont la teneur en silicium est comprise entre 5 et 40 % et, de préférence, entre 10 et 35%.

De préférence, le laitier oxydé provient d'une opération antérieure de fabrication de ferromanganèse par silicothermie d'un mélange fondu de minerai de manganèse et de fondant, et contenant essentiellement outre de l'oxyde de manganèse MnO, de la chaux, de la silice, de l'alumine et de la magnésie. Enfin, le brevet FR-A-1 321 508, au nom de PECHINEY, decrit un procédé de fabrication de métaux et alliages, et plus particulièrement de ferrochrome, de ferromanganèse ou de ferro-titane, par réduction métallothermique de composés A, contenant un métal à un état de valence positif, par mise en contact intime avec un produit réducteur métallique contenant au moins un composant tel que le silicium, l'aluminium, le magnésium, le bore, le titane, le béryllium, un métal alcalino-terreux, un métal alcalin, un ferro-alliage d'un des éléments précédents, dans lequel ledit composé A est en phase liquide, et l'on insuffle dans sa masse le produit B sous forme solide divisée, la nature du produit B étant choisie en fonction de celle du composé A, en conformité avec la réaction entre A et B, connue en elle-même.

Le composé A est, par exemple, un laitier de manganèse fondu au four électrique à environ 1450° C, et le composé B insufflé est un ferrosilicium à 98% de silicium finement broyé.

### INCONVENIENTS DE L'ART ANTERIEUR

Dans ces différents procédés, trois inconvénients apparaissent, du fait des conditions économiques actuelles:

a) il faut disposer, sur le site de production, d'au moins un four électrique de grande puissance pour produire le "mélange fondu" de minerai de manganèse et de chaux qui sera soumis à la réduction métallothermique par le silico-manganèse, et, dans la plupart des cas, d'un second four électrique pour produire, à partir de minerai de manganèse (ou de scories non épuisées en MnO), de quartz et de coke, le silicomanganèse réducteur;

b) quel que soit le cycle choisi: injection de réducteur silicié solide dans le mélange fondu liquide (FR 1 321 508 et US 4 363 657), ou brassage en poche du mélange fondu liquide contenant du manganèse sous forme de MnO et du réducteur silicié liquide (US 3 347 664), il y a d'importantes pertes thermiques, du fait que la chaleur contenue dans les produits de réaction, dont l'énergie de fusion représente environ 600 KWh/T (2150 MJ/T) pour les alliages de Mn et environ 1000 KWh/T (3600 MJ/T) pour les laitiers, est perdue au refroidissement;

c) dans le cas -relativement fréquent- où le minerai de manganèse, qui est souvent de la pyrolusite, (où le Mn est principalement sous forme de $MnO_2$ au degré d'oxydation +4), est tout d'abord pré-réduit en (approximativement) MnO, par passage, dans un four tournant, à environ 1000° C, en présence d'un réducteur carboné, on dépense environ 2300 KWh (8400 MJ) par tonne de Mn contenu, pour effectuer cette préréduction.

Le souci de réduire très sensiblement les consommations d'énergie par tonne de manganèse produit, en utilisant au mieux les effets exothermiques des réactions chimiques mises en jeu, et de réduire les investissements en matériel lourd (fours électriques de grande puissance et fours de préréduction) a amené à concevoir un nouveau schéma de réactions métallothermiques conduisant du minerai de manganèse oxydé à un degré moyen égal ou supérieur à 3 et, de préférence, compris entre 3 et 4, jusqu'au ferromanganèse affiné.

## OBJET DE L'INVENTION

L'objet de l'invention est donc un procédé de production de ferro-manganèse affiné, par réduction métallo-thermique, à partir de minerai de manganèse oxydé, du type "polyanite", tel que la pyrolusite ou analogue, dans lequel le manganèse est à un degré d'oxydation moyen au moins égal à 3 et généralement compris entre 3,5 et 4, c'est-à-dire en majeure partie sous forme de dioxyde $MnO_2$, et d'un alliage réducteur à base de silicium, en présence de chaux.

On sait que, d'une part le dioxyde de manganèse $MnO_2$ commence à se dissocier thermiquement dès 200°C sous la pression atmosphérique et d'autre part, que la réaction $MnO_2 + Si \rightarrow SiO_2 + Mn$ fournit 384 k Joules par atome-gramme de manganèse, à 1500 ° C, alors que la réaction $MnO + 1/2 \, Si \rightarrow 1/2 \, SiO_2 + Mn$ ne fournit que 67,2 k Joules par atome-gramme de manganèse à 1500° C; le premier élément de l'invention consiste donc à introduire, dans le cycle de réaction, le miner ai de manganèse froid, ou tout au moins, à une température au plus égale à 200°C, de façon que la plus grande partie du Mn soit encore à l'état de $MnO_2$, au moment de la réaction.

La chaux CaO, qui est thermiquement stable jusqu'à son point de fusion (2650° C) peut être introduite froide, ou préchauffée, dans la mesure où l'on dispose de calories de faible prix pour la porter à une température de une à plusieurs centaines de degrés.

Compte tenu du bilan thermique des réactions mises en oeuvre, on peut introduire, au premier stade, du minerai de manganèse à degré d'oxydation moyen:
- égal ou peu inférieur à 4 si la chaux est à une température proche de l'ambiante,
- de l'ordre de 3,5 si la chaux est préchauffée à une température intermédiaire entre l'ambiante et 900° C, par exemple entre 400 et 600° C,
- de l'ordre de 3 ou peu supérieur à 3 si la chaux est prechauffée à une température au moins égale à 800-900° C. La chaux peut, le cas échéant, être additionnée de 5 à 20 % de magnésie, qui tend à fluidifier les laitiers en abaissant le point de fusion.

Bien entendu, il ne s'agit là que d'indications qui ne constituent pas des limites strictes de l'invention.

L'homme de l'art règlera, dans chaque cas, le bilan thermique en fonction du minerai dont il dispose et de la dimension des réacteurs, les pertes thermiques étant d'autant plus faibles que l'on opère sur des quantités importantes de matières.

L'alliage réducteur, enfin, c'est-à-dire le silico-manganèse, est introduit à l'état liquide, car la réaction métallo-themique $MnO_2 + (SiMn) \rightarrow SiO_2 + Mn$ ne s'amorce qu'à température élevée. La teneur en silicium de l'alliage peut se situer entre 15 et 45%.

La succession des opérations est alors la suivante:

1. on introduit, dans un réacteur, du silico-manganèse liquide, dont l'origine sera précisée un peu plus loin,

2. on introduit, progressivement, dans le silico-manganèse liquide, la charge de minerai de Mn (tel que défini ci-dessus), et de chaux (préchauffée ou non, selon le cas) en quantite calculée pour former, approximativement avec la silice, du silicate monocalcique ($SiO_2$, CaO). Il se produit la réaction théorique suivante:

$$MnO_2 + CaO + Si \rightarrow Mn_{(Fe)} + (SiO_2, CaO) + 474,3 \text{ kJ}$$

(du silico-manganèse)

qui fournit, d'une part, du ferro-manganèse liquide, et d'autre part, un laitier liquide de $SiO_2$, CaO contenant encore environ 30 % en MnO (en moyenne 20 à 35%).

La réaction est accélérée par un moyen d'agitation qui facilite la mise en contact de la phase liquide (SiMn), et de la phase solide (minerai + chaux). Ce moyen peut être, de façon connue, un dispositif à secousses, ou, de préférence, un brassage pneumatique, c'est-à-dire une insufflation de gaz, air ou gaz inerte, tel qu'argon ou azote au moyen d'au moins une tuyère d'injection débouchant à la partie inférieure de la poche. La réaction est très rapide (5 à 15 minutes), et, généralement, 8 à 10 minutes). Le ferro-manganèse liquide -qui constitue le produit final du cycle réactionnel- est séparé du laitier, et il est coulé en lingotière.

3. le laitier non épuisé peut être immédiatement traité pour récupérer le manganèse. Si l'on dispose d'un four électrique, on procède, de façon connue, à une réduction de ce laitier (solidifié et concassé), avec addition de quartz, et de coke, de façon à produire un silico-manganèse liquide qui est introduit au stade n°1.

Mais, on peut également, et c'est là une des caractéristiques de l'invention, opérer directement en poche en traitant immédiatement le laitier fondu par un réducteur solide ou liquide, ayant une teneur en silicium au moins égale à 50 %, tel que du ferro-silicium ou du silicium métal à 96-99%, concassé en grains de 2 à 10 mm.

Cette réaction est fortement exothermique. On l'accélère par un brassage pneumatique, dans les mêmes conditions que la réaction principale au stade n°2. Elle produit, d'une part du silico-manganèse liquide avec une teneur en silicium comprise entre 15 et 45 %, qui peut être immédiatement réintroduit au stade n°1 du cycle avec un complément de silicium, si l'on veut avoir un cycle "bouclé" comme on l'expliquera un peu plus loin, et d'autre part un laitier à base de silicate de calcium pratiquement épuisé en manganèse, que l'on rejette.

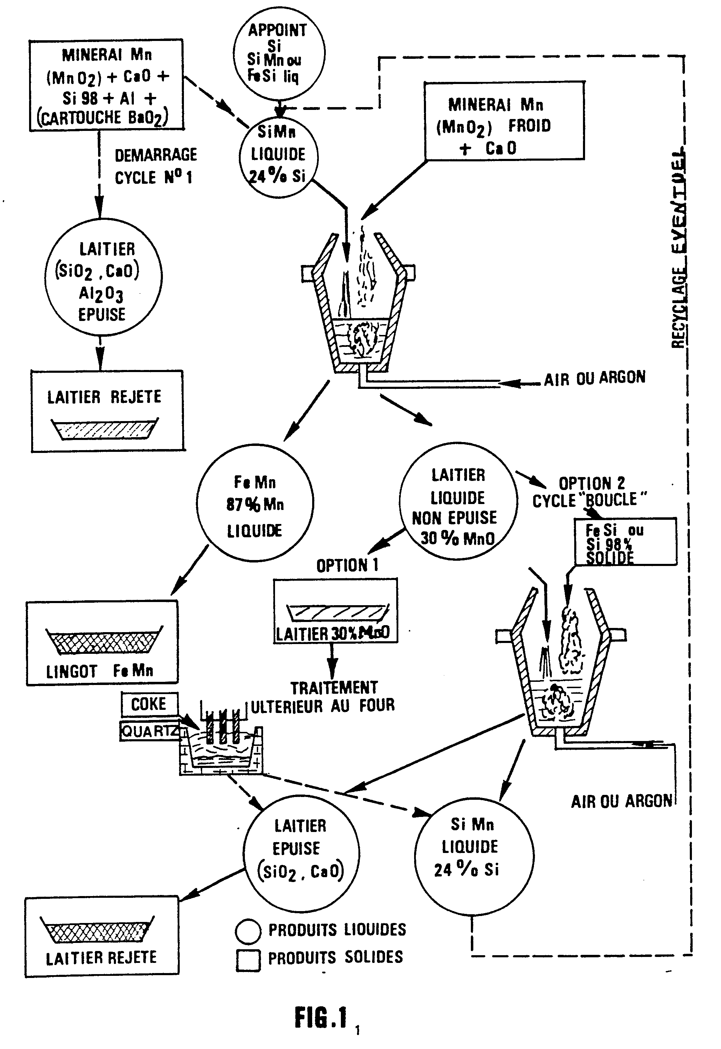

L'ensemble du cycle apparaît sur la figure 1.

On a donc, dans chaque cas, une entrée de produit solide froid: le mélange minerai de manganèse + chaux dans un cas, et le ferro-silicium au stade d'épuisement, et une entrée de produit fondu: le silico-manganèse dans le premier cas, et le laitier non épuisé à 30 % de MnO au stade d'épuisement. Une entrée auxiliaire de silico-manganèse liquide, provenant d'une autre source peut intervenir au premier stade, dans le cas où l'on veut un cycle "bouclé", dans lequel on réintroduit, au premier stade, le silico-manganèse obtenu en épuisant dans un second stade le laitier à 30 % de Mn produit au premier stade. Cet appoint de silicium peut, également, être réalisé sous forme de ferro-silicium liquide si l'on dispose, à proximité, d'un four élaborant ce produit.

Un moyen d'amorcer le premier cycle, c'est-à-dire de disposer d'une première charge de silico-manganèse liquide consiste à l'obtenir par fusion de silico-manganèse solide dans un four à induction. Mais, on peut aussi faire appel à une réduction silico-thermique de minerai de manganèse ou, plus exactement, à une réduction alumino-silico-thermique, dans lesquels les proportions du mélange de minerai de manganèse oxydé ($MnO_2$) + chaux + ferro-silicium 98% + aluminium, sont calculées de façon à obtenir du silico-manganèse à 24 % de silicium et moins de 0,5% d'aluminium, et un laitier épuisé à base de ($SiO_2$, CaO) + $Al_2O_3$, contenant moins de 5 % de MnO, que l'on peut rejeter. Le silico-manganèse ainsi obtenu, et qui est à une température pouvant atteindre 1650-1700 ° C peut, après decrassage du laitier épuisé, être immédiatement mis en contact avec le mélange de minerai de Mn ($MnO_2$) + chaux, au stade n°1 du procédé.

Au lieu d'utiliser, comme réducteur, un mélange de ferro-silicium et d'aluminium, on peut utiliser un alliage à base de silicium et d'aluminium.

## EXEMPLE DE MISE EN OEUVRE DE L'INVENTION

On a utilisé du silico-manganèse initial, ayant la composition suivante:
Si: 24%
Mn: 65%
Fe: 11%
550 kg de cet alliage ont été introduits à l'état liquide, à une température de 1450° C, dans un premier réacteur de 1500 litres de capacité, garni en magnésie.

Le réacteur n°1 est muni de deux tuyères d'injection, de 8 mm de diamètre, débouchant au fond, et disposées sur deux rayons formant un angle de 90 °. Le débit d'air est de l'ordre de 15 à 25 $Nm^3$/h dans chaque tuyère.

On déverse, dans le silico-manganèse liquide, en 8 minutes environ, un mélange de 800 kg de minerai de manganèse à 77% de $MnO_2$ en grains de 0 à 15 mm, contenant, en outre 5 % MnO (le degré d'oxydation moyen du minerai est donc de 3,88), 3,5 % $Fe_2O_3$, 3 % $SiO_2$, plus un peu d'alumine et d'eau de constitution, ainsi que 360 kg de chaux en grains de 0 à 10 mm.

La réaction est très exothermique. La température s'élève d'environ 200 ° C et peut atteindre 1550 à 1600° C.

Lorsque tout le minerai et la chaux ont été chargés, on maintient l'injection d'air pendant 1 à 2 minutes. Puis on coule le laitier surnageant (1050 kg) dans le réacteur n°2, qui est identique au premier, ou qui peut être le réacteur n°1 lui-même s'il est disponible, et le ferro-manganèse (600 kg) dans une lingotière où on le laisse refroidir spontanément.

Le ferro-manganèse a la composition suivante:
Mn: 87 %
Fe: 12 %
Si: 0,55 %
C: 0,08%
Le laitier non épuisé a la composition suivante:
MnO: 30%
CaO: 32%
$SiO_2$: 31%

Al$_2$O$_3$ et divers: 7%

On introduit immédiatement dans ce laitier 180 kg de ferro-silicium à 78,5 % de Si en grains de 2 à 10 mm, tout en injectant, par les tuyères, un débit d'air de l'ordre de 15 Nm$^3$/h.

La réaction est achevée en 8 minutes. On injecte encore de l'air pendant 2 minutes et on coule, tout d'abord un laitier épuisé, ne contenant plus que 3,4 % de MnO, et que l'on rejette, et 350 kg de silico-manganèse à 24 % Si, que l'on peut réintroduire dans le réacteur no1, de façon à reprendre un nouveau cycle. Mais, on constate que l'on à introduit, au premier stade, 550 kg de SiMn à 24% de Si (donc: 132 kg de Si) et que l'on ne récupère que 350 kg de SiMn à 24 % de Si (donc 84 kg de Si), la différence (48 kg de Si) ayant été consommée pour réduire le minerai de manganèse et provoquer la réaction exothermique.

On doit donc, pour "boucler" le cycle, soit rajouter, au premier stade 200 kg de SiMn liquide à 24 % de silicium provenant d'une autre source, soit introduire 48 kg de silicium sous forme de ferro-silicium ou de silicium métal à l'état liquide, soit encore effectuer l'épuisement du laitier à 30 % de Mn avec un excès de silicium métal, ce qui fournirait un silico-manganèse plus riche en silicium (35 à 40 % par exemple); en théorie, il faudrait réintroduire, au premier stade, 380 kg de SiMn à 34,8 % de silicium. Le premier procédé semble toutefois préférable.

Quant au silico-manganèse à 24 % de silicium, constituant la première charge lors de la mise en oeuvre d'un cycle de réaction, il peut être obtenu par silico-aluminothermie, à par tir d'une charge comportant:

Minerai de Mn à 77,0 % MnO$_2$: 700 kg
Silicium 98% en grains de 0 à 5 mm: 210 kg
Aluminium, grenaille: 150 kg
Chaux: 160 kg
Fer divisé: 50 kg

La réaction est initiée de façon connue, par une amorce (Al + BaO$_2$). Après réaction, on obtient 550 kg de SiMn à 24% Si et un laitier épuisé que l'on rejette.

## Revendications

1°/ Procédé de production de ferro-manganèse affiné par réaction métallothermique, en poche, de minerai de manganèse et d'un alliage réducteur à base de silicium, caractérisé en ce que dans un premier stade, on introduit dans un réacteur, muni d'au moins une tuyère d'injection débouchant dans sa partie inférieure, du silico-manganèse fondu, puis, progressivement, un mélange de chaux et de minerai de manganèse solide à un degré d'oxydation moyen supérieur à 3 et, de préférence, compris entre 3,5 et 4, en ce que l'on agite par insufflation de gaz dans la tuyère pendant au moins toute la durée de la réaction, et en ce que l'on sépare, par coulée, le laitier à base de silicate de calcium, contenant encore de 20 à 35% de MnO, et le ferro-manganèse affiné.

2°/ Procédé de production de ferro-manganèse affiné, selon la revendication 1, caractérisé en ce que dans un deuxième stade, on introduit dans un réacteur muni d'au moins une tuyère d'injection débouchant dans sa partie inférieure, le laitier contenant encore de 20 à 35% de MnO, et, progressivement, un réducteur solide, en grain, ou liquide à haute teneur en silicium (au moins égale à 50 %), en ce que l'on agite par insufflation de gaz dans la tuyère pendant au moins toute la durée de la réaction, et en ce que l'on sépare, par coulée, le laitier à base de silicate de calcium épuisé en manganèse et du silico-manganèse, avec une teneur en silicium comprise entre 15 et 45%.

3°/ Procédé, selon revendication 1, caractérisé en ce que l'on introduit du minerai de manganèse:
- à un degré d'oxydation moyen égal ou peu inférieur à 4 si la chaux est introduite à une température proche de l'ambiante,
- à un degré d'oxydation moyen égal ou peu supérieur à 3, si la chaux est préchauffée à une température au moins égale à 900° C,
- à un degré d'oxydation moyen de l'ordre de 3,5 si la chaux est préchauffée à une température intermédiaire entre l'ambiante et 900 ° C.

4°/ Procédé, selon revendication 1, caractérisé en ce que la chaux est additionnée de 5 à 20 % de magnésie.

5°/ Procédé, selon revendication 2, caractérisé en ce que le silico-manganèse obtenu par épuisement du laitier à 20-35% de MnO est réutilisé, dans le premier stade, pour réduire le minerai de manganèse solide.

6°/ Procédé, selon revendication 5, caractérisé en ce que la charge de silico-manganèse réintroduite au premier stade est complétée avec une addition d'un alliage liquide, à base de silicium, tel que du silico-manganèse, du ferro-silicium ou du silicium métal à 96-99% de Si.

7°/ Procédé, selon revendication 1, caractérisé en ce que la première charge de silico-manganèse du premier stade, au démarrage d'un cycle, est obtenue par réduction silico-aluminothemique de minerai de manganèse en présence de chaux.

## Patentansprüche

1. Verfahren zur Herstellung von gefeintem Ferromangan durch metallothermische Reaktion von Manganerz und einer Reduktionslegierung auf Siliziumbasis in der Pfanne,
dadurch gekennzeichnet, daß man in einem ersten Abschnitt in einem mit wenigstens einer in seinem unteren Teil mündenden Injektionsdüse ausgerüsteten Reaktor geschmolzenes Siliko-Mangan und dann fortlaufend ein Gemisch von Kalk und festem Manganerz mit einem mittleren Oxidationsgrad über 3 und vorzugsweise im Bereich von 3,5 bis 4 einführt und daß man durch Einblasen von Gas in die Düse während wenigstens der ganzen Dauer der Reaktion umrührt und daß man durch Gießen die Schlacke auf Basis von Kalziumsilikat, die noch 20 bis 35 % MnO enthält, und das gefeinte Ferromangan trennt.

2. Verfahren zur Herstellung von gefeintem Ferromangan nach dem Anspruch 1, dadurch gekennzeichnet, daß man in einem zweiten Abschnitt in einen mit wenigstens einer in seinem unteren Teil mündenden Injektionsdüse ausgerüsteten Reaktor die noch 20 bis 30 % MnO enthaltende Schlacke und fortlaufend ein kornförmiges festes oder ein flüssiges Reduktionsmittel mit hohem Siliziumgehalt (wenigstens gleich 50 %) einführt und daß man durch Einblasen von Gas in die Düse während wenigstens der ganzen Dauer der Reaktion umrührt und daß man durch Gießen die Schlacke auf Basis von Kalziumsilikat, die an Mangan erschöpft ist, und Siliko-Mangan mit einem Siliziumgehalt im Bereich von 15 bis 45 % trennt.

3. Verfahren nach Anspruch 1, dadurch gekennzeichnet, daß man Manganerz:
- mit einem mittleren Oxidationsgrad gleich oder etwas unter 4, wenn der Kalk mit einer der Umgebungstemperatur nahen Temperatur eingeführt wird,
- mit einem mittleren Oxidationsgrad gleich oder etwas über 3, wenn der Kalk auf eine Temperatur von wenigstens gleich 900° C vorerhitzt wird,
- mit einem mittleren Oxidationsgrad der Größenordnung von 3,5, wenn der Kalk auf eine Zwischentemperatur zwischen Raumtemperatur und 900° C vorerhitzt wird, einführt.

4. Verfahren nach Anspruch 1, dadurch gekennzeichnet, daß der Kalk mit 5 bis 20 % Magnesiumoxid vernetzt wird.

5. Verfahren nach Anspruch 2, dadurch gekennzeichnet, daß das Siliko-Mangan, das durch Erschöpfung der Schlacke mit 20 - 35 % MnO erhalten wird, im ersten Abschnitt wieder verwendet wird, um das feste Manganerz zu reduzieren.

6. Verfahren nach Anspruch 5, dadurch gekennzeichnet, daß die in den ersten Abschnitt wieder eingeführte Siliko-Mangan-Charge mit einem Zusatz einer flüssigen Legierung auf Siliziumbasis, wie z.B. Siliko-Mangan, Ferrosilizium oder Siliziummetall mit 96 bis 99 % Si vervollständigt wird.

7. Verfahren nach Anspruch 1, dadurch gekennzeichnet, daß die erste Siliko-Mangan-Charge des ersten Abschnitts bei Ingangsetzung eines Zyklus' durch silikoaluminothermische Reduktion von Manganerz in Gegenwart von Kalk erhalten wird.

**Claims**

1. A method of producing medium-carbon ferro-manganese by a metallothermic reaction, in an enclosed vessel, between manganese ore and a reducing alloy based on silicon, characterised in that the reactor is fitted with at least one injection nozzle discharging into its bottom region, that molten silico-manganese is placed in the reactor at the first stage, that a mixture of lime and solid manganese ore with an average degree of oxidation of over 3 and preferably from 3.5 to 4 is added gradually, that they are agitated by blowing gas into the nozzle at least throughout the reaction, and that the slag based on calcium silicate and still containing 20 to 35 % of MnO and the refined ferro-manganese are separated by casting.

2. The method of claim 1, characterised in that the reactor is equipped with at least one injection nozzle discharging into its lower region, that the slag still containing from 20 to 35% of MnO is placed in the reactor at a second stage, that a solid, granular or molten reducing agent with a large silicon content (at least 50%) is gradually added, that they are agitated by blowing gas into the nozzle at least throughout the reaction, and that the calcium silicate based slag, exhausted of manganese, and the silico-manganese containing from 15 to 45% of silicon are separated by casting.

3. The method of claim 1, characterised in that manganese ore is introduced:
- at an average degree of oxidation of 4 or only slightly less if the lime is introduced at a temperature close to ambient,
- at an average degree of oxidation of 3 or only slightly over, if the lime is preheated to a temperature of at least 900° C,
- at an average degree of oxidation of the order of 3.5 if the lime is preheated to an intermediate temperature between ambient and 900° C.

4. The method of claim 1, characterised in that the lime has 5 to 20% of magnesia added to it.

5. The method of claim 2, characterised in that the silicomanganese obtained by exhausting slag containing 20-35% of MnO is reused at the first stage to reduce the solid manganese ore.

6. The method of claim 5, characterised in that the charge of silico-manganese reintroduced at the first stage has a molten silicon based alloy added to it, such as silico-manganese, ferrosilicon or metal silicon containing 96-99% of Si.

7. The method of claim 1, characterised in that the first charge of silico-manganese at the first stage, when a cycle is started, is obtained by silico-aluminothermic reduction of manganese ore in the presence of lime.

0 153 260

FIG.1